# EUROPEAN PATENT APPLICATION

(11) **EP 2 353 787 A2**
(43) Date of publication of application: **10.08.2011**
(21) Application number: 11153728.8
(22) Date of filing: 08.02.2011
(51) Int. Cl.: B25B 19/00, B25B 23/00, B60B 29/00

(54) **Spanner for tyre-rim bolts.**

(30) Priority: 10.02.2010 IT MI20100201
(71) Applicant: Euroreifen MS S.r.L., 38068 Marco di Rovereto (TN) (IT)
(72) Inventor: Mengoni, Emanuele, 38068, MARCO DI ROVERETO (TN) (IT)
(74) Representative: Mittler, Enrico

(57) **Abstract**

A spanner (1) for bolts (7) is described, which comprises a first substantially straight element (2) and coupling means (5, 6) with the bolt (7). One end (22) of the element (2) is pivotally coupled with one end (31) of a second intermediate element (3) in turn pivotally coupled, with a second end (32) thereof, with one end (41) of a third element (4) intended to accommodate said coupling means (5). (Fig. 4).

## Description

The present invention relates to a spanner for loosening or tightening bolts, particularly for those used for fixing the rims of vehicles such as cars, vans, trucks and the like.

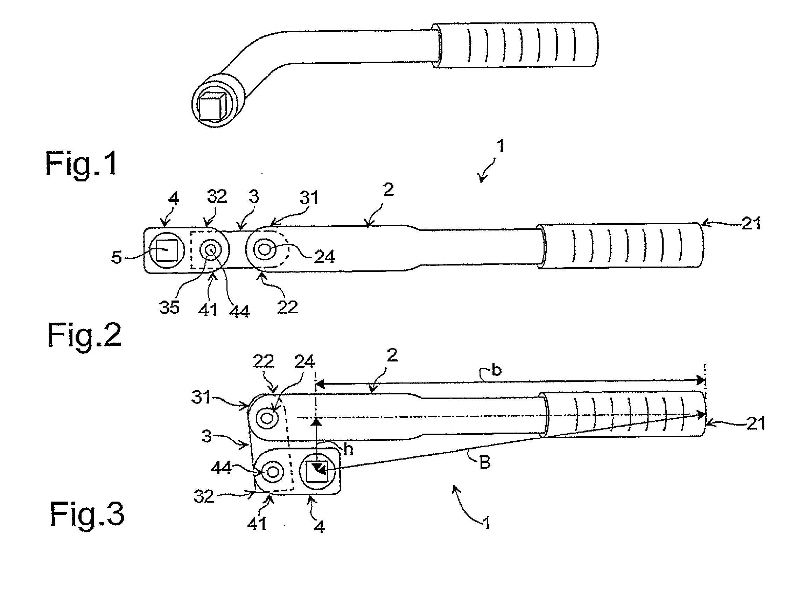

Certain types of spanner for loosening or tightening clamp bolts of motor vehicles have already been proposed, usually consisting of a bar, substantially straight if desired, or consisting of straight sections firmly joined by other curvilinear sections (Fig. 1), an end of which is intended to serve as a grip, while the other end is intended to support supporting means, usually having a square section, firmly or pivotally connected thereto, by means of dynamometric clutch, if desired, to which various types of clamping may be coupled according to the type of bolt to be moved.

The bolts typically fix the wheels of the vehicles to the hubs of the axles which support them. A drawback often occurs: a formation of oxide between the bolt and the riin or hub, especially when the wheel has been fixed for some time, and this may result in a significant difficulty in releasing the bolt to loosen the same. In particular, fixing the clamping of the spanner to the bolt and then attempting to loosen the bolt by knocking on the free end of the spanner with a sledge-hammer is required. It is worth noting that this manoeuvre is often performed when the vehicle is raised off the ground on a lift and, in this circumstance, the wheels may be idle and, when as such, they are to be kept stopped during this latter manoeuvre. The manoeuvre to be performed with the sledge-hammer is not completely risk-free for the operator performing it, indeed the spanner could slip during the knock and fall on the user or the clamping could uncouple from the bolt and pop off in the user direction, In addition, if the bolt is not loosened on the first knock, others should be performed until it is released.

It would be desirable to provide a spanner for loosening or tightening bolts, particularly for fixing the tyre-rims of motor vehicles, which solves the above-mentioned drawbacks.

GB-2338199A describes an extendible arm for loosening or tightening tyre-rim bolts. Said arm includes hinges with a maximum nominal rotation of 90°.

It is the main object of the present invention to provide a spanner for loosening or tightening tyre-rim bolts, which allows a bolt to be released without using other tools and in complete safety.

It is another object of the present invention to provide a spanner for loosening or tightening tyre-rim bolts at low production costs.

It is a further object of the present invention to provide a spanner for loosening or tightening tyre bolts which, with the force applied by the user being equal, allows a resulting force momentum greater than that which would be obtained with other spanners of known type.

In accordance with the invention, such an object is achieved by a spanner as described in claim 1.

These and other features of the present invention will become more apparent from the following detailed description of a practical embodiment thereof, shown by way of non-limiting example in the accompanying drawings, in which:
Figure 1 shows a perspective side view of a spanner for tyre-rim clamp bolts according to the prior art;
Figure 2 shows a side view of a spanner for tyre-rim clamp bolts according to the present invention;
Figure 3 shows a side view of the spanner in figure 2, in resting position; and

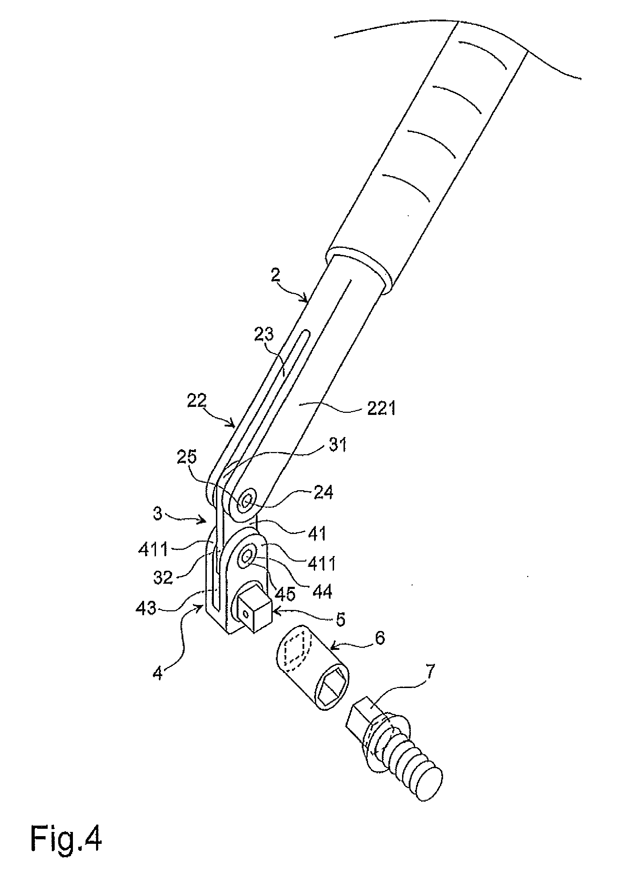

Figure 4 shows a perspective view of an enlarged detail of the spanner in figure 2;
Figure 5 shows a side view of the spanner in figure 2, in using position.

With reference to the above-listed figures, a spanner 1 comprises a first substantially straight element 2 having a free end 21 and a second end 22, intended to be pivotally connected to the first end 31 of a second element 3, having a second end 32 pivotally connected to the first end 41 of a third element 4. Said third element 4 includes a second free end 42, intended to support supporting means 5 for a clamping or adapter 6 for a bolt 7.

At end 22, the first element 2 has a longitudinal slot 23 intended to accommodate the end 31 of element 3 which will co-penetrate therein with element 2. In fact, end 22 is a sort of fork consisting of two elements 221, separated by the longitudinal slot 23.

Similarly, at end 41, the third element 4 has a longitudinal slot 43, intended to accommodate the end 32 of element 3 which will co-penetrate therein also with element 4. In fact, end 41 is a sort of fork consisting of two elements 411, separated by the longitudinal slot 43.

Both the terminals 221 of end 22 and the terminals 441 of end 41 have a transversal through hole 25 and 45, respectively, in which a pin 24 and 44 will be inserted, respectively. Said pin 24, 44 pivotally secures the end 31, 32 of element 3 to element 2, 4. The pins or hinges 24 and 44 are axially parallel.

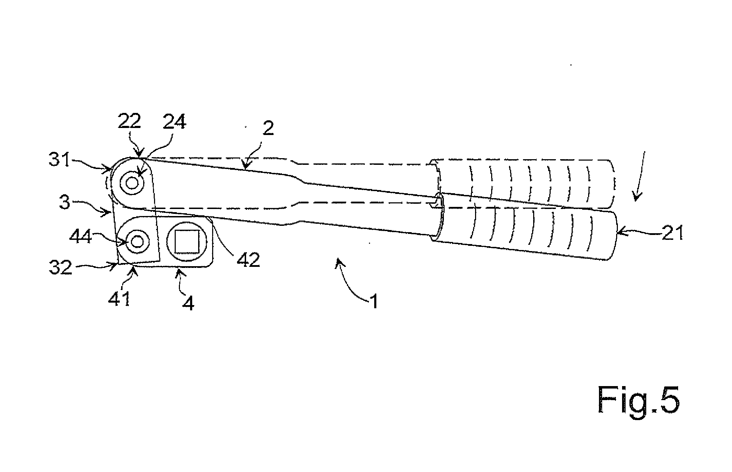

Elements 2 and 4 may freely rotate about said pins 24, 44 without degree limits up to the physical contact which occurs between the elements 2 and 4 as shown in figure 5, where a contact zone 42 is identified; in such a case it could be a contact line or substantially a point of contact. The technical advantage deriving from said contact will become more apparent below.

For a clamping 6, the supporting means 5 are firmly connected at the free end 42 of element 4, and the axis of the supporting means 5 is parallel to the axis of the two pins 24 and 44 and substantially orthogonal to the elements 2, 3 and 4. The connection of means 5 to element 4 may be rotational and may preferably include a clutch of known type.

The sizing of the elements of spanner 1, in addition to that of pins 24 and 44, will be such as support the efforts which should be sustained by the same in use, for example the thickness of ends 221 and 411, as well as that of the intermediate element 3 will be of 3-10 mm. The diameter of pins 24 and 44 will be of 5 mm.

The length of element 2 will be 40-60 cm, that of elements 3 and 4 will be 5-10 cm.

In practice, to use spanner 1 for loosening a clamp bolt 7 for a vehicle wheel, the user will select the clamping 6 suitable for the type of bolt 7 and will couple it with the supporting means 5. Thereafter, the user will couple the clamping 6 with bolt 7 with extreme simplicity, and will first bring the spanner to the resting position (figure 3), i.e. with the elements 2 and 4 substantially parallel and the element 3 substantially transversal to the latter, then in the working position (figure 5), with the elements 2 and 4 in contact in zone 42. For simplicity, as bolt 7 is usually loosened counter-clockwise, when connecting the supporting means 5 to bolt 7, the user will ensure that element 4 is substantially horizontal with the end 42 on the left with respect to the end 41, the element 3 substantially vertical and the element 2, with the end 22 of element 2 arranged vertically above the end 41 of element 4, with element 2 firstly substantially horizontal and then resting on element 4 as apparent in figure 5. By pushing element 2 downwards, by applying a force preferably immediately close to end 21 perpendicularly to element 2, a torque will be applied to bolt 7 which will suffer a force momentum the modulus of which will correspond to the product of the force modulus applied by the modulus of the arm, i.e. the distance between the axis of bolt 6 and the point where the force is applied. That being said, a first advantage is achieved by using spanner 1 with respect to a spanner of known type, indeed considering length b of a spanner of known type, it is noted that the arm B obtained with spanner 1 will be increased, since B will have a length equal to the hypotenuse of a right triangle having b as largest cathetus and h as smallest cathetus, where **h** is the distance between the axis of bolt 7 and the axis of element 2 (for the Pythagorean theorem **B** = (**b**²+**h**²)^{1/2}).

Therefore, the resulting larger arm **B** will allow a greater force momentum to be obtained, the force applied by the user being equal.

A further and even more important advantage offered by using spanner 1 instead of the spanners of known type, is that once the free end 21 has been brought to the just described using position to loosen bolt 7, by gripping the element 2, the user may first move it upwards and then downwards, so as to strike the element 4 below element 2.

These knockings, performed by the user on the bolt 7 using spanner 1 with a single hand, also due to the fact that the force applied by the user contrasts the possible opposite force of inertia offered by the idle wheels, contribute to releasing bolt 7 by breaking or moving possible oxide layers formed between bolt 7 and the rim or hub.

In fact this simple method of using spanner 1, which includes using element 2 to knock on element 4, exerts a very intense rotation torque to bolt 7, similar to that which would be applied with a spanner of known type on which a knocking has been given with a sledge-hammer, without however any risk, while exerting less hard work and using a single tool instead of two.

If the force applied by the user who grips the spanner is not enough, the spanner may be placed as in figure 5 and the sledge-hammer knocking may be provided with an external means, e.g. a hammer (in said figure 5 element 2 in the position in figure 3 is shown with dashed line). The user will easily center the end of element 2, the force transmission being concentrated in the narrowed contact zone 42. The knocking energy is advantageously transmitted to element 4 in an almost complete and instant manner, which element 4 rotates while loosening the bolt.

If there is no contact between element 2 and element 4, e.g. if hinges 24 and 44 have a maximum set rotation angle of 90°, the transmission of the knocking energy will be transmitted through said hinges 24, 44 by means of element 3 with a much greater energy dispersion (three transmission means 24, 3, 44 against a single contact zone 42). Moreover, especially in the above-mentioned case of knocking with an external sledge-hammer, hinges 24, 44 may break as too stressed.

Consider for example a vehicle raised off the ground in a common garage, the wheels of which are to be replaced and hence are idle.

If bolt 7 is oxidized, using a known spanner, a first user needs to keep the wheel stopped and a second operator needs to hold the spanner in position with one hand and, with the other hand, to knock on the end of the spanner with a sledge-hammer. The dangerousness and complexity of the operation is evident, which involves unacceptable efforts and time losses in garages where thousands of wheels are replaced every year.

Spanner 1 according to the present invention permits the disassembly by a single operator because, once the hooking element 5, 6 is coupled with bolt 7, it is sufficient to hold the wheel with one hand and rotate the element 2 up to bringing it in abutment with element 4. Said abutment is equivalent to said sledge-hammer knocking and is always advantageously accurate (the sledge-hammer is not secured to the spanner, element 2 forms part of spanner 1). Using a single hand may be even sufficient, by acting on element 2 only, because when the hooking element 5, 6 and bolt 7 are coupled, and element 2 is then gripped, a first movement may indeed be performed in the opposite direction (for the rush), thus causing a slight rotation of the wheel in the opposite direction to that of element 2, thus increasing the inertia momentum applied for releasing (sum of the inertia of element 2 and of the wheel rotating in the opposite direction).

The torsional momentum generated for the release takes more advantage of the inertia of element 2: the sledge-hammer knocking does not ever completely take advantage of the operator's force as it is braked by the risk of not hitting the spanner end.

The spanner according to the present invention is also advantageously usable outside the garage as a tool to be associated with known kits for replacing wheels on vehicles in case of puncturing. Even if bolt 7 is not oxidized, a common driver usually has difficulty in loosening the bolts 7: said spanner 1 solves the problem. The joint also permits a limited volume within the kit.

Said spanner 1 may be obviously used in any circumstance where a bolt 7 is to be loosened, not only for disassembling wheels.

## Claims

1. A spanner (1) for bolts (7) which comprises a first substantially straight element (2) and coupling means (5, 6) with the bolt (7), one end (22) of the first element (2) is pivotally coupled by means of a first hinge (24) with one end (31) of a second intermediate element (3), in turn pivotally coupled by means of a second hinge (44), with a second end (32) thereof, with one end (41) of a third element (4) intended to accommodate said coupling means (5), **characterized in that** said hinges (24, 44) are adapted to allow said first element (2) to come in abutment (42) with said third element (4).

2. A spanner (1) according to claim 1, **characterized in that** said end (22) of the element (2) comprises two terminals (221) separated by a longitudinal slot (23).

3. A spanner (1) according to claim 1, **characterized in that** said end (41) of the element (4) comprises two terminals (411) separated by a longitudinal slot (43).

4. A spanner (1) according to any one of the preceding claims, **characterized in that** said terminals (221, 411) comprise a transversal through hole (25, 45) wherein a pin (24, 44) is pivotally inserted.

5. A spanner (1) according to claim 1, **characterized in that** said intermediate element (3) has a through hole (35) both at the end (31) and at the end (32).

6. A spanner (1) according to claims from 3 to 5, **characterized in that** the end (31) of the intermediate element (3) co-penetrates into the longitudinal slot (23) so that the pin (24) inserted into the through holes (25), obtained in the terminals (221), and into the hole (35) obtained at the end (31) of the intermediate element (3), pivotally connects the first element (2) and the intermediate element (3),

7. A spanner (1) according to claims from 3 to 6, **characterized in that** the end (32) of the intermediate element (3) co-penetrates into the longitudinal slot (43) so that the pin (44) inserted into the through holes (45), obtained in the terminals (411), and into the hole (35) obtained at the end (32) of the element (3), pivotally connects the third element (4) and the intermediate element (3).

8. A bolt releasing process, comprising coupling a spanner (1) with a bolt (7) and a movement of releasing a first element (2) of said spanner (1) pivotally associated with a third element (4) accommodating coupling means (5, 6) with the bolt (7) by means of a second intermediate element (3), **characterized in that** said release occurs by abutting (42) the first element (2) against the third element (4).
